# EUROPEAN PATENT SPECIFICATION

(11) **EP 3 861 772 B1**
(45) Date of publication and mention of the grant of the patent: **29.11.2023**
(21) Application number: 18785576.2
(22) Date of filing: 08.10.2018
(51) Int. Cl.: H04W 4/46, H04W 72/541, H04W 76/00

(54) **USER EQUIPMENT AND METHOD FOR REDUCING INTERFERENCE FOR A COMMUNICATION SESSION**
BENUTZERGERÄT UND VERFAHREN ZUR INTERFERENZREDUZIERUNG FÜR EINE KOMMUNIKATIONSSITZUNG
ÉQUIPEMENT UTILISATEUR ET PROCÉDÉ DE RÉDUCTION D'INTERFÉRENCE POUR UNE SESSION DE COMMUNICATION

(43) Date of publication of application: 11.08.2021
(73) Proprietor: Huawei Technologies Co., Ltd., Shenzhen, Guangdong 518129 (CN)
(72) Inventor: KESHAVAMURTHY, Prajwal, 80992 Munich (DE); ZHOU, Chan, 80992 Munich (DE); SPAPIS, Panagiotis, 80992 Munich (DE)
(74) Representative: Körber, Martin Hans
(86) International application number: PCT/EP2018/077301
(87) International publication number: WO 2020/074057

(56) References cited:
- EP-A1- 3 273 634
- US-A1- 2012 300 662
- US-A1- 2013 322 277
- US-A1- 2017 013 655

## Description

### TECHNICAL FIELD

In general, the present application relates to communication networks. More specifically, the present application relates to user equipments for V2V communications in a wireless communication network.

### BACKGROUND

Vehicular communication use cases require increased reliability and availability (see 5GCAR Project Number 761510, Deliverable D2.1 5GCAR Scenarios, Use Cases, Requirements and KPIs, v1.0, 2017). For example, V2X Cooperative Automated Driving (CAD) requires guaranteed communications among the participating vehicles. This implies that it is needed for the involved vehicles to be able to guarantee the communication between two communicating entities in terms of packet delivery ratio in certain time constraints.

Communication between user equipments (UE to UE communication) may be direct without the intervention of an external entity, e.g. a base station, or indirect like typical UE to UE communication using a cellular network. Direct vehicular communication may be with or without the assistance of the network, i.e., the base station. In the former case it is required to have coverage everywhere to be able to provide guaranteed communication among user equipments (UEs). In the latter case, however, there is no possibility to provide guaranteed communications since there is no assistance from the network in resource selection.

Two UEs either use direct or indirect links to communicate. In the indirect communication the messages are transferred through the network of the operator (e.g., radio access network and core network). The problem of such approach is that, even though it manages to guarantee message delivery, it introduces excessive delays that are above the acceptable levels of the vehicular use Cases and requires coverage everywhere (see 5GCAR Project Number 761510, Deliverable D2.1 5GCAR Scenarios, Use Cases, Requirements and KPIs, Version: v1.0, 2017-08-31).

Direct vehicular communication may be with or without the assistance of the network (i.e., the base station). The communication with the assistance of the network in LTE networks is referred to as PC5 Mode 3 whereas the communication without the assistance of the network is called PC5 Mode 4 communication. These two ways of communications have special characteristics in terms of scheduling and interference management respectively: for PC5 Mode 3, scheduling and interference management of V2V traffic is assisted by eNodeBs via control signaling over the Uu interface. The eNodeBs will assign the resources being used for V2V signaling in a dynamic manner. As for PC5 Mode 4, scheduling and interference management of V2V traffic is supported based on distributed algorithms implemented between the vehicles. As mentioned, the distributed algorithm is based on sensing with semi-persistent transmission.

The problem of the direct communications is that PC5 Mode 3 may achieve guaranteed communication but requires network coverage and a single operator to manage the overall communication, whereas PC5 Mode 4 does not require network coordination but cannot provide any guarantees.

Previous works for guaranteed direct communications focus on the security aspect of communications. In particular, US7891004 B1 studies security of vehicular communications, wherein communications with a server ensure secured communication for adding a node to a group or not. US8514825 B1 proposes to access the network for receiving access credentials comprising vehicle manufacturers, cellular wireless service providers, and road-side unit operators.

In light of the above, there is a need for a user equipment, allowing guaranteed communications with a further user equipment in a wireless communication network efficiently.

US2017013655 discloses a communications device for establishing a communication link with other communication devices. Before the establishment of the communication link, the communication device is configured to listen for measurement report in order to determine which resources are available. Then, the communication device sends a resource allocation request in a control portion informing other devices. If no further measurement report is received, then the communications device may start data transmission. Otherwise, the communications device may restart resource reservation process.

US2012300662 A1 discloses a method and an apparatus for performing resource coordination among multiple cells to cancel near-far interference for device-to-device transmission. In particular, A cellular user equipment can forward its uplink resource grant information over the dedicated resource exchanging channel when it determines potential interference. A device-to-device user equipment can monitor the dedicated resource exchanging channel in order to identify one or more resources that can potentially interfere with device-to-device transmission.

EP3273634A1 discloses a transmitting device for transmitting vehicular data via a sidelink interface to one or more receiving devices. The transmitting device performs autonomous radio resource allocation for transmitting the vehicular data via the sidelink interface. An application layer generates the vehicular data and forwards the vehicular data together with a priority indication and one or more quality of service parameters to a transmission layer responsible for transmission of the vehicular data via the sidelink interface. The transmission layer performs autonomous radio resource allocation based on the received priority indication and the one or more quality of service parameters. The transmission layer transmits the vehicular data via the sidelink interface to the one or more receiving devices according to the performed autonomous radio resource allocation.

US2013322277A1 discloses a method for measurement and interference avoidance for direct device-to-device (D2D) links. The method may be implemented by a wireless transmit/receive unit (WTRU). The method may include determining a sounding reference signal (SRS) to detect high interference and facilitate measurements on a link with another WTRU. The method may also include using the SRS on a direct link with another WTRU.

### SUMMARY

It is an object of the application to provide a user equipment for communicating with a further user equipment in a wireless communication network efficiently without the network assistance or intervention.

The foregoing and other objects are achieved by the subject matter of the independent claims. Further implementation forms are apparent from the dependent claims, the description and the figures.

Generally, embodiments of the application relate to a user equipment (UE) for V2V communications in a wireless communication network. Embodiments of the application can provide guaranteed communications for user equipments (UEs) without network assistance or intervention.

More specifically, according to a first aspect, the application relates to a user equipment for communicating with a further user equipment of a plurality of user equipments in a wireless communication network, wherein the user equipment is configured to establish together with the further user equipment a communication session for exchanging data between the user equipment and the further user equipment by reserving one or more communication resources for exchanging data between the user equipment and the further user equipment during the communication session on the basis of information about one or more interference sensing measurements obtained by the user equipment and information about one or more further interference sensing measurements obtained by the further user equipment.

The one or more communication resources can be one or more resource blocks. The first mode can be a PC5 mode 3 and the second mode can be a PC5 mode 4.

Thus, an improved user equipment is provided, allowing a guaranteed communication with a further user equipment of a plurality of user equipments in a wireless communication network.

In a further possible implementation form of the first aspect, the user equipment is configured to reserve the one or more communication resources for exchanging data between the user equipment and the further user equipment during the communication session by: receiving the information about the one or more further interference sensing measurements from the further user equipment; selecting the one or more communication resources on the basis of the information about the one or more interference sensing measurements obtained by the user equipment and the information about the one or more further interference sensing measurements received from the further user equipment; reserving the selected one or more communication resources for the communication session; and transmitting the selected one or more communication resources to the further user equipment for reserving the selected one or more communication resources by the further user equipment.

In a further possible implementation form of the first aspect, the user equipment is configured to reserve the one or more communication resources for exchanging data between the user equipment and the further user equipment during the communication session by: transmitting the information about the one or more interference sensing measurements obtained by the user equipment to the further user equipment for allowing the further user equipment to select the one or more communication resources on the basis of the information about the one or more interference sensing measurements provided by the user equipment and the information about the one or more further interference sensing measurements obtained by the further user equipment; receiving the one or more communication resources selected by the further user equipment from the further user equipment; and reserving the one or more communication resources selected by the further user equipment for the communication session.

In a further possible implementation form of the first aspect, the user equipment is configured to establish together with the further user equipment the communication session for exchanging data between the user equipment and the further user equipment by further broadcasting a session request message to the plurality of user equipments using a communication resource selected by the user equipment, wherein the session request message comprises an identifier of the user equipment, an identifier of the further user equipment, a session identifier and/or a group identifier.

In a further possible implementation form of the first aspect, the session request message further comprises information about a plurality of candidate communication resources proactively reserved by the user equipment and wherein the user equipment is further configured to receive data from the further user equipment using one or more of the plurality of candidate communication resources reserved by the user equipment.

In a further possible implementation form of the first aspect, the user equipment is configured to establish together with the further user equipment the communication session for exchanging data between the user equipment and the further user equipment by further receiving, in response to the session request message, a session request response message from the further user equipment, wherein the session request response message comprises an identifier of the user equipment, an identifier of the further user equipment a session identifier and/or a group identifier.

In the first aspect, the user equipment is further configured to broadcast a first control message comprising information about the communication session and/or the one or more communication resources reserved for the communication session between the user equipment and the further user equipment to the plurality of user equipments.

In a further possible implementation form of the first aspect, the user equipment is configured to reserve the one or more communication resources by assigning a unique identifier, in particular a session identifier, a user identifier, or a group identifier, or a combination of user identifiers, to the communication session between the user equipment and the further user equipment and wherein the first control message comprises the unique identifier.

In a further possible implementation form of the first aspect, the user equipment is configured to reserve the one or more communication resources for the communication session for a specified time period and wherein the first control message comprises the specified time period.

In a further possible implementation form of the first aspect, the user equipment is further configured, in case the communication session ends before the end of the specified time period, to broadcast a second control message for informing the plurality of user equipments that the reversed one or more communication resources have been released.

In a further possible implementation form of the first aspect, the user equipment is configured to receive a third control message containing information about a further communication session and/or one or more further communication resources reserved for the further communication session from at least one other user equipment of the plurality of user equipments and to transmit a fourth control message to the at least one other user equipment for instructing the at least one other user equipment to release the one or more further communication resources reserved for the further communication session. In a further possible implementation form the user equipment is configured to obtain the information using interference sensing, i.e. without receiving the third control message.

In a further possible implementation form of the first aspect, the user equipment is configured to receive a fourth control message from another user equipment instructing the user equipment to release the one or more communication resources reserved for the communication session and, in response to the fourth control message, release the one or more communication resources reserved for the communication session or reserving one or more different communication resources for exchanging data between the user equipment and the further user equipment during a further communication session.

In the first aspect, the user equipment is configured to receive from at least one other user equipment of the plurality of user equipments a third control message containing information about an amount of interference allowed by the at least one other user equipment for one or more further communication resources reserved for a further communication session and to adjust on the basis of the allowable amount of interference a transmission power used by the user equipment for exchanging data with the further user equipment using the one or more communication resources.

According to a second aspect, the invention relates to a method of communication between a user equipment and a further user equipment of a plurality of user equipments in a wireless communication network, wherein the method comprises: establishing together with the further user equipment a communication session for exchanging data between the user equipment and the further user equipment by reserving one or more communication resources for exchanging data between the user equipment and the further user equipment during the communication session on the basis of information about one or more interference sensing measurements obtained by the user equipment and information about one or more further interference sensing measurements obtained by the further user equipment.

Thus, an improved method is provided, allowing a guaranteed communication between a user equipment and a further user equipment of a plurality of user equipments in a wireless communication network.

The invention can be implemented in hardware and/or software.

### BRIEF DESCRIPTION OF THE DRAWINGS

Further embodiments of the invention will be described with respect to the following figures, wherein:
Figure 1 shows a schematic diagram of a wireless communication network according to an embodiment;
Figure 2 shows a schematic diagram illustrating a procedure for session negotiation and establishment according to an embodiment;
Figure 3 shows a schematic diagram illustrating a procedure for clearing resources according to an embodiment;
Figure 4 shows a schematic diagram illustrating a procedure for fast session establishment according to an embodiment;
Figure 5 shows a schematic diagram illustrating a re-transmission procedure according to an embodiment;
Figure 6 shows a schematic diagram illustrating a procedure for distributed V2V power control using interference limits according to an embodiment;
Figure 7 shows a schematic diagram illustrating a procedure for distributed V2V power control with negotiation among the user equipments according to an embodiment;
Figure 8 shows a schematic diagram illustrating a procedure for resolving resource conflict according to an embodiment; and
Figure 9 shows a schematic diagram illustrating a method of communication between a user equipment and a further user equipment according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present application may be placed. It will be appreciated that other aspects may be utilized and structural or logical changes may be made without departing from the scope of the present application. The following detailed description, therefore, is not to be taken in a limiting sense, as the scope of the present application is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present application covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

The conventional way cellular autonomous communication (i.e., PC5 Mode 4 in LTE systems) works is to reserve a resource by the user equipment (UE) in a semi-persistent way for a period of time (e.g., 5 to 15 seconds) for certain transmission. This is done using the sensing function, during which the UE senses the wireless medium for a certain period (i.e., 1 seconds) to identify a resource that it is not being excessively used, and then the UE proceeds to reserve this resource sending a control message (Sidelink Control Information - SCI) containing the period for which the resource is reserved, the message type, and the UE identifier. The problem of this approach is that the UE reserves a resource based on its local view and thus interference at the receiver side cannot be avoided.

As will be described in more detail in the following, embodiments of the application relate to a user equipment (UE) for communicating with a further user equipment (UE) of a plurality of user equipments (UEs) in a wireless communication network, wherein the user equipment is configured to establish together with the further user equipment a communication session for exchanging data between the user equipment and the further user equipment.

Embodiments of the application provide a session establishment scheme for direct communications between user equipments without the network intervention. This type of direct communication is called PC5 Mode 4 in LTE systems and will be hereafter referred to as autonomous direct communication. The session establishment can be used for services that require guaranteed services over a certain period of time, such as cooperative collision avoidance or platooning, but not for all the services such as CAM messages or sensor sharing messages.

With the proposed scheme the user equipments can identify jointly the most appropriate spectrum resources to use based on receiver-side measurements before establishing a communication so as to avoid interference. Moreover, the user equipments can reserve this resource jointly both for transmission and reception. The reservation can be performed for the whole communication that will take place, as it is identified in the joint resource selection phase. Additionally, embodiments of the application facilitate the power control among the user equipments so as to restrict the interference on the communicating ends.

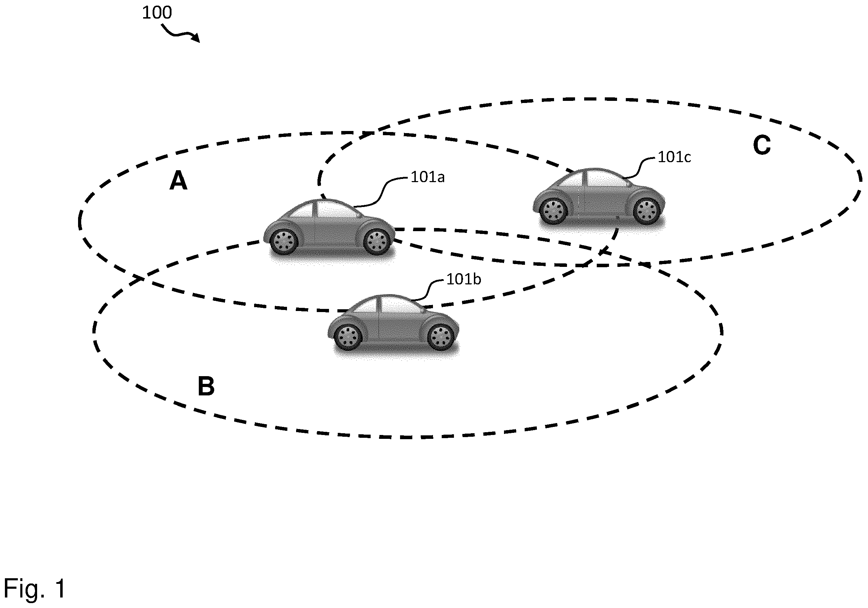

Figure 1 shows a schematic diagram of an exemplary wireless communication network 100 according to an embodiment, wherein the wireless communication network 100 comprises a user equipment 101a for communicating with a further user equipment 101b as well as a third user equipment 101c of a plurality of user equipments 101a-c in the wireless communication network 100. Each of the plurality of user equipments 101a-c comprises a coverage area for data transmission or reception. The user equipment 101a is accessible from both the further user equipment 101b and the third user equipment 101c, but the further user equipment 101b and the third user equipment 101c cannot sense each other. If the further user equipment 101b and the third user equipment 101c select the same resource, then the user equipment 101a will have interference and will not be able to receive any message from the further user equipment 101b or the third user equipment 101c.

In the embodiment shown in figure 1, each of the plurality of user equipments 101a-c could be implemented in the form of a user entity such as a mobile phone or a vehicle or a communication module of a vehicle. However, it will be appreciated that embodiments of the application apply to communication devices other than mobile phones or vehicles as well.

Furthermore, the user equipment 101a can operate in two different communication modes, including a first network-assisted communication mode and a second autonomous communication mode, wherein in the second autonomous communication mode the user equipment 101a is configured to establish a communication session for exchanging data together with the further user equipment 101b.

According to the embodiment, if the user equipment 101a and the further user equipment 101b want to have a guaranteed (in terms of data message reception) session, e.g., for cooperative automated driving, then they will jointly identify proper resources to be used and jointly reserve the required resources for all transmissions for the session. Thus, the third user equipment 101c that can sense the user equipment 101a will not use any of the resources reserved by the user equipment 101a and the further user equipment 101b for their session.

More specifically, the user equipment 101a is configured to establish together with the further user equipment 101b a communication session for exchanging data between the user equipment and the further user equipment by reserving one or more communication resources during the communication session on the basis of information about one or more interference sensing measurements obtained by the user equipment 101a and information about one or more further interference sensing measurements obtained by the further user equipment 101b.

In an embodiment, the user equipment 101a is configured to receive the information about the one or more further interference sensing measurements from the further user equipment 101b (likewise, the user equipment 101a can be configured to provide its interference sensing measurements to the further user equipment 101b); select the one or more communication resources on the basis of the information about the one or more interference sensing measurements obtained by the user equipment 101a and the information about the one or more further interference sensing measurements received from the further user equipment 101b; reserve the selected one or more communication resources for the communication session; and transmit the selected one or more communication resources to the further user equipment 101b for reserving the selected one or more communication resources by the further user equipment 101b.

In order to reserve the one or more communication resources, the user equipment 101a can transmit the information about the one or more interference sensing measurements obtained by the user equipment 101a to the further user equipment 101b for allowing the further user equipment 101b to select the one or more communication resources on the basis of the information about the one or more interference sensing measurements provided by the user equipment 101a and the information about the one or more further interference sensing measurements obtained by the further user equipment 101b. Then, the user equipment 101a can receive the one or more communication resources selected by the further user equipment 101b from the further user equipment 101b, and thus reserve the one or more communication resources for the communication session.

Furthermore, the user equipment 101a is configured to establish together with the further user equipment 101b the communication session by further broadcasting a session request message to the plurality of user equipments 101a-c using a communication resource selected by the user equipment 101a, wherein the session request message comprises an identifier of the user equipment 101a, an identifier of the further user equipment 101b, a session identifier, a group identifier, and/or information about a plurality of candidate communication resources proactively reserved by the user equipment 101a. The user equipment 101a can receive data from the further user equipment 101b using one or more of the plurality of candidate communication resources reserved by the user equipment 101a.

In response to the session request message, the user equipment 101a receives a session request response message from the further user equipment 101b, wherein the session request response message comprises an identifier of the user equipment 101a, an identifier of the further user equipment 101b, a session identifier and/or a group identifier.

In a further embodiment, to reserve the one or more communication resources, the user equipment 101a can assign a unique identifier, in particular a session identifier, a user identifier, or a group identifier, to the communication session between the user equipment 101a and the further user equipment 101b. The user equipment 101a can further reserve the one or more communication resources for the communication session for a specified time period. Then, the user equipment 101a is further configured to broadcast a first control message comprising information about the communication session and/or the one or more communication resources reserved for the communication session, wherein the first control message comprises the unique identifier and/or the specified time period.

The first control message can also comprise information about a service type associated with the communication session, information about an amount of interference allowed by the user equipment 101a for the one or more reserved communication resources and/or information about a transmission power used by the user equipment 101a for the one or more reserved communication resources.

In case the communication session ends before the end of the specified time period, the user equipment 101a can broadcast a second control message for informing the plurality of user equipments 101a-c that the reversed one or more communication resources have been released.

In the embodiment of this invention, the user equipment 101a is configured to receive a third control message containing information about a further communication session and/or one or more further communication resources reserved for the further communication session from at least one other user equipment of the plurality of user equipments 101a-c. The third control message comprises information about an amount of interference allowed by the at least one other user equipment.

The user equipment 101a is configured to adjust a transmission power used by the user equipment 101a for exchanging data with the further user equipment 101b using the one or more communication resources on the basis of the allowable amount of interference. Next, the user equipment 101a can transmit to the at least one other user equipment a request for continuing the communication session with the further user equipment 101b using an adjusted transmission power used by the user equipment 101a for exchanging data with the further user equipment 101b using the one or more communication resources. In a further embodiment, the user equipment 101a can just start transmitting using a transmission power leading to low interference levels, i.e. without the request.

Furthermore, the user equipment 101a can transmit a fourth control message to the at least one other user equipment for instructing the at least one other user equipment to release the one or more further communication resources reserved for the further communication session. Also the user equipment 101a can receive a fourth control message from another user equipment instructing the user equipment to release the one or more communication resources reserved for the communication session and, in response to the fourth control message, release the one or more communication resources reserved for the communication session or reserving one or more different communication resources for exchanging data between the user equipment 101a and the further user equipment 101b during a further communication session.

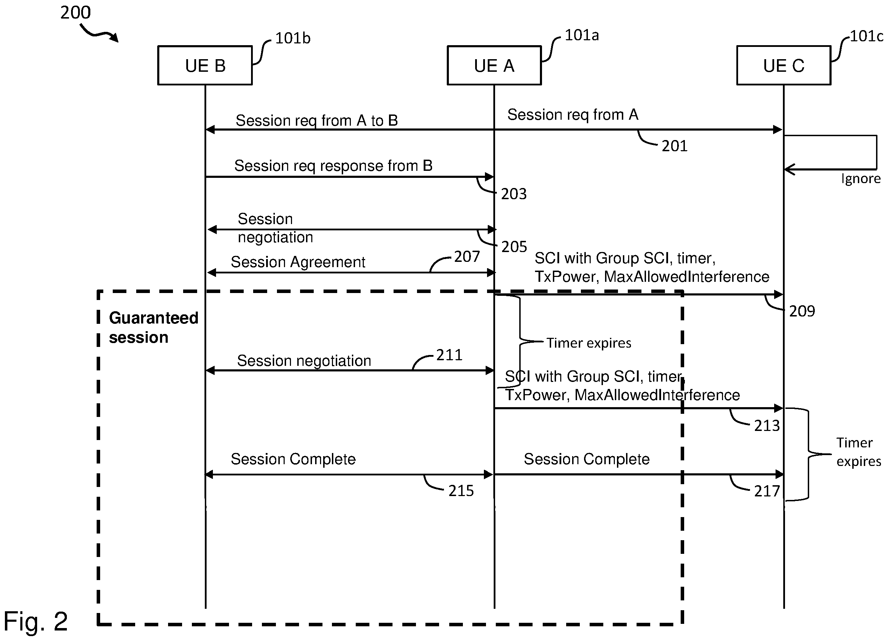

Embodiments of the invention include the following procedures: how a resource is reserved for a session; how transmission power may be adjusted for reducing the interference among different active sessions; how a group of user equipments may ask other user equipments or group of user equipments to stop transmitting via certain resources because of a conflict. These procedures will be further elaborated in the following under reference to figures 2 to 8.

Figure 2 shows a schematic diagram illustrating a procedure 200 for session negotiation and establishment in a wireless communication network according to an embodiment, wherein the wireless communication network comprises a user equipment 101a for communicating with a further user equipment 101b as well as a third user equipment 101c. The session negotiation is the first phase of the overall communication, during which user equipments (UEs) can exchange information about the session to be established and resources to be used. The procedure 200 shown in figure 2 comprises the following steps:
Step 201: the user equipment 101a will broadcast a message with a session request to the further user equipment 101b and the third user equipment 101c.
Step 203: the further user equipment 101b sends a response message to the user equipment 101a.
Step 205: the user equipment 101a and the further user equipment 101b perform session negotiation.
Step 207: the user equipment 101a and the further user equipment 101b reach a session agreement.
Step 209: the user equipment 101a send a Sidelink Control Information (SCI) message that contain a group identifier; a timer for the duration of the session; maximum allowed interference; and transmission power to the third user equipment 101c.
Step 211: If the timer expires, the user equipment 101a and the further user equipment 101b perform renegotiation and new resource may be identified to be reserved.
Step 213: the user equipment 101a send a Sidelink Control Information (SCI) message that contain a group identifier; a timer for the duration of the session; maximum allowed interference; and transmission power to the third user equipment 101c.
Step 215: the user equipment 101a and the further user equipment 101b have a session complete.
Step 217: the user equipment 101a send a session complete message to the third user equipment 101c.

When the user equipment 101a wants to start a collaborative collision avoidance with the further user equipment 101b, the user equipment 101a will send a message with a corresponding request. Since there is no established session yet, the message is a broadcast message that will be received by all user equipments in the wireless communication networks, i.e. the further user equipment 101b as well as the third user equipment 101c shown in figure 2.

Since the third user equipment 101c is not related to the session, the third user equipment 101c will ignore the message. On the other hand, the further user equipment 101b will respond to this message accepting or rejecting to start negotiations for this session.

During the session negotiation, the user equipment 101a and the further user equipment 101b will exchange their preferred resources to communicate. The preferred resources relate to the least interference in the user equipment 101a and the further user equipment 101b and can be identified, for instance, using the typical sensing mechanisms available in cellular networks (e.g., LTE systems).

The identification of the resources can be done by the user equipment 101a, the further user equipment 101b or any negotiation scheme. One exemplary implementation could be that the final decision on the resources to be used is made by the entity that initiates the session; other schemes could have election of leader of the group. During the session negotiation the involved UEs will also decide the duration of the session and the expected transmissions for enabling proper resource reservation.

Once the session negotiation is performed, both UEs will start to send periodically their Sidelink Control Information (SCI) messages that contain: a group identifier (this can be the new identifier or the identifier of one of the entities participating in the session; timer for the duration of the session; and/or session/service type. Optionally, in order to facilitate power control schemes among the UEs, the SCI messages may further contain the following information: maximum allowed interference and transmission power. The power control mechanism will be further presented below.

For simplicity, figure 2 shows that only the user equipment 101a sends the message but both the user equipment 101a and the further user equipment 101b can send this message. At the same time the user equipment 101a and the further user equipment 101b transmit data on the reserved resources. If the timer expires then re-negotiation will take place and new resource may be identified to be reserved. If the session ends before the expiration of the timer, then the UEs will send a control message indicating that the respective resource is released and the UEs in the vicinity may use it.

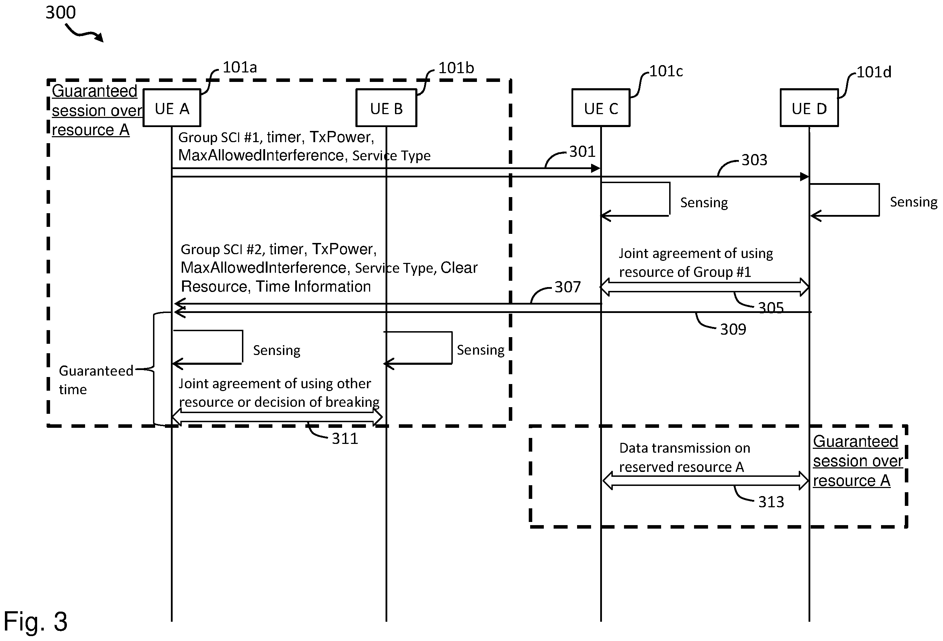

Figure 3 shows a schematic diagram illustrating a procedure 300 for clearing resources according to an embodiment, in order to facilitate a user equipment (UE) to react once other UEs attempt to access its resources.

Assuming that the user equipment 101a and the further user equipment 101b have an active session using a reserved resource, and that the third user equipment 101c and a fourth user equipment 101d decide to use the reserved resource for a higher priority service, then the higher priority service should be handled but the user equipment 101a and the further user equipment 101b that already access the resource should have time to react by either breaking their session or by selecting another set of resources. The user equipment 101a and the further user equipment 101b are aware of the service type for the third user equipment 101c and the fourth user equipment 101d, since the service type is transferred in the SCI messages.

The procedure 300 shown in figure 3 comprises the following steps:
Step 301: the user equipment 101a sends towards the third user equipment 101c a SCI message that contains a group identifier; a timer for the duration of the session; a service type; maximum allowed interference; and transmission power.
Step 303: the user equipment 101a sends towards the fourth user equipment 101d a SCI message that contains a group identifier; a timer for the duration of the session; a service type; maximum allowed interference; and transmission power.
Step 305: the third user equipment 101c and the fourth user equipment 101d reach a joint agreement of using the resource that the user equipment 101a and the further user equipment 101b use.
Step 307: the fourth user equipment 101d sends towards the user equipment 101a a SCI message that contains a group identifier; a timer; a service type; maximum allowed interference; transmission power; clear resource and time information.
Step 309: the third user equipment 101c sends towards the user equipment 101a a SCI message that contains a group identifier; a timer; a service type; maximum allowed interference; transmission power; clear resource and time information.
Step 311: the first user equipment 101a and the further user equipment 101b reach a joint agreement of using other resource or decision of breaking the current session.
Step 313: the third user equipment 101c and the fourth user equipment 101d transmit data using the released resource.

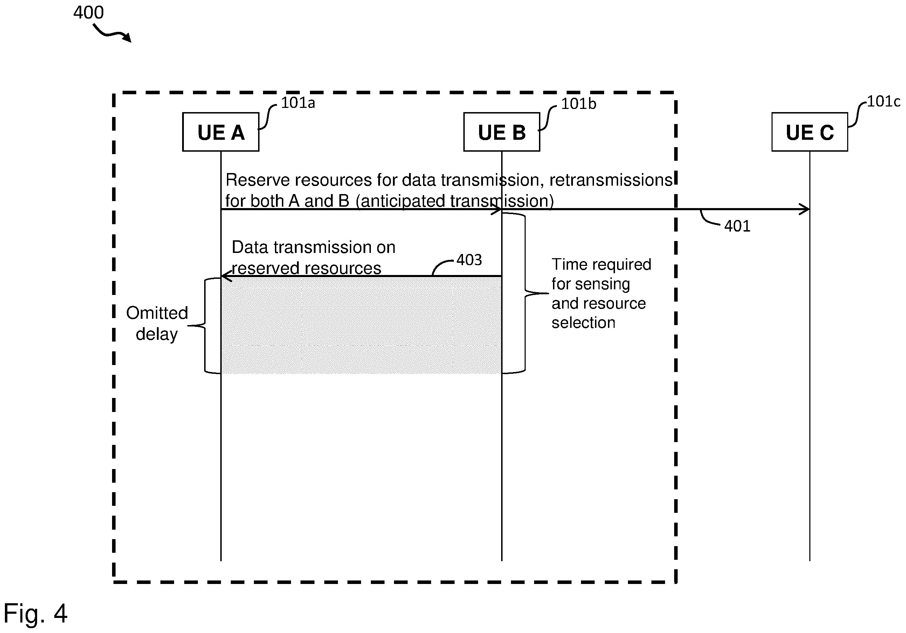

Figure 4 shows a schematic diagram illustrating a procedure for fast session establishment according to an embodiment. For ensuring the fast session establishment, reception of messages should be ensured. To ensure the proper reception of the message, the user equipment 101a in figure 4 that asks for the establishment of a session may send its request for a session and directly reserve the resources to be used by the further user equipment 101b. Thus, the resources are not being used by other UEs in the vicinity, such as the third user equipment 101c in figure 4. This results in reduced delay and high probability in the reception, since it is ensured that the user equipment 101a will not have interference in this resource.

The procedure 400 shown in figure 4 comprises the following steps:
Step 401: the user equipment 101a asks for the establishment of a session and sends its request for a session to reserve the resources to be used.
Step 403: the further user equipment 101b transmits data to the user equipment 101a on the reserved resources.

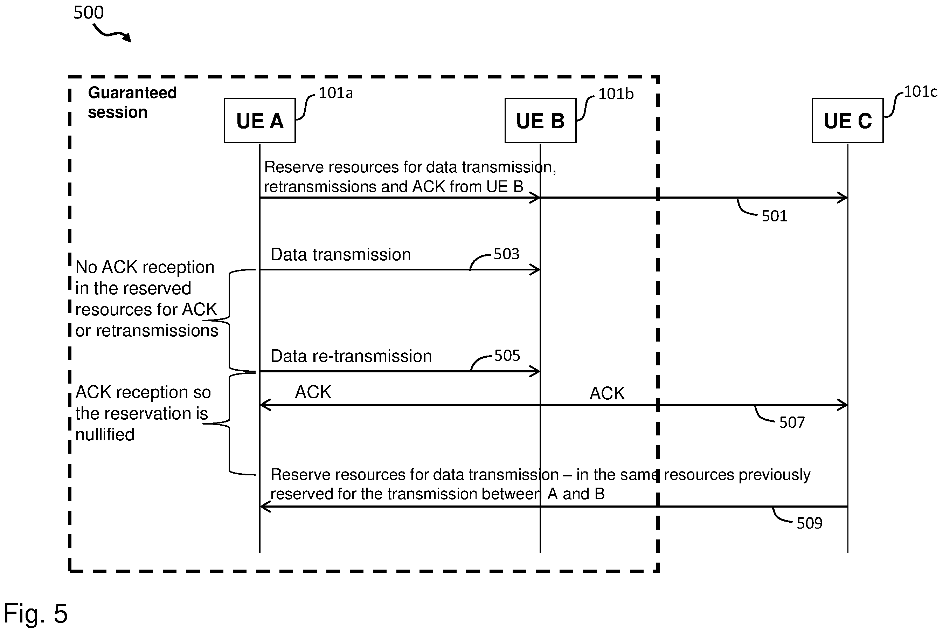

Figure 5 shows a schematic diagram illustrating a re-transmission procedure according to an embodiment. In order to offer guarantees about proper communication, each transmission should be accompanied with an acknowledgement message from the receiver side. If the message is not acknowledged then the transmitter should retransmit the message so as to be received properly. In autonomous communications such as PC5 Mode 4 in LTE systems, acknowledgements would result in significant waste of resources; thus the retransmissions are used without waiting for any reception, anticipating that the receiver will receive one of the sent messages.

Since the session establishment scheme facilitates resource selection on behalf of other UEs in the group, it can solve the resource waste by reserving resources for the other communication ends and at the same time handle the guarantees. In particular a resource is reserved for retransmissions. If the receiver side does not send an acknowledgement message, the transmitter will send the same message again. If the receiver sends an acknowledgement message then the rest of the resources reserved for the retransmission are released to be used by other UEs.

The procedure 500 shown in figure 5 comprises the following steps:
Step 501: the user equipment 101a asks for the establishment of a session and sends its request for a session to reserve the resources to be used.
Step 503: the user equipment 101a transmits data to the further user equipment 101b on the reserved resources.
Step 505: the user equipment 101a re-transmits data to the further user equipment 101b on the reserved resources.
Step 507: the user equipment 101a and the third user equipment 101c sends a acknowledgement message to each other.
Step 509: the third user equipment 101c sends a message to reserve the resource that is previously reserved for the transmission between the user equipment 101a and the further user equipment 100b for the data transmission to the user equipment 101a.

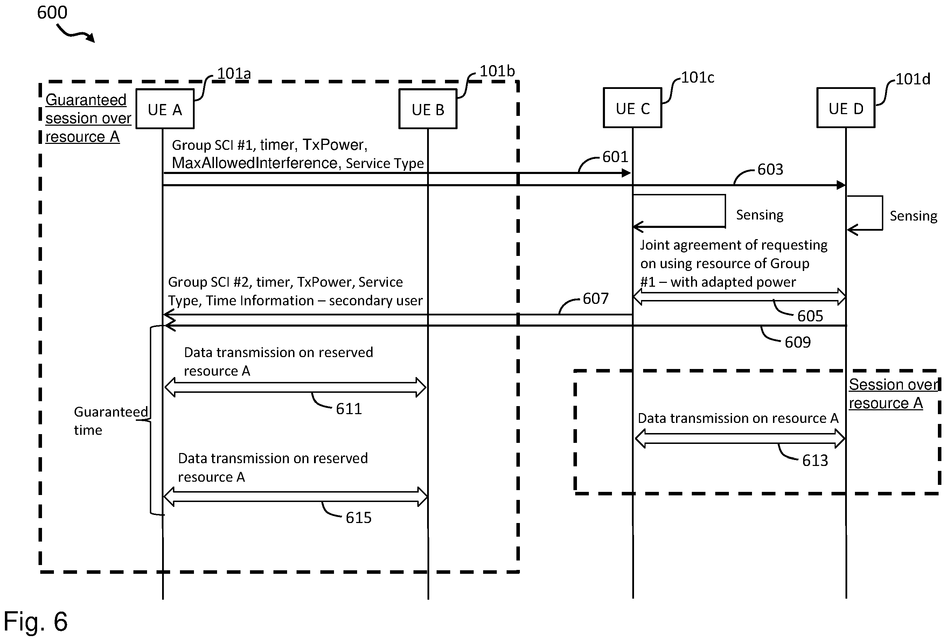

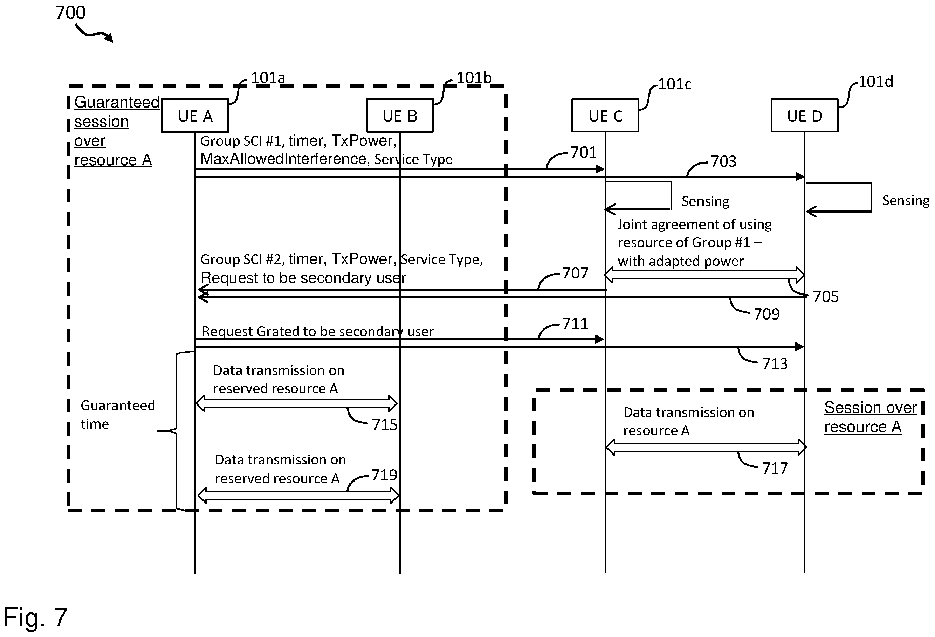

If the communicating user equipments participating in a session inform the other user equipments about the acceptable interference levels (interference tolerance based on the accessed service), then the other user equipments (UEs) may re-use the already occupied resources as long as they do not exceed the acceptable interference levels. This is performed using the SCI messages comprising the maximum allowed interference and transmission power, as already indicated above. Implementations for the power control scheme are shown in the following figures 6 and 7.

Figure 6 shows a schematic diagram illustrating a procedure for distributed V2V power control using interference limits according to an embodiment.

In this embodiment, a first group of user equipments comprising the user equipment 101a and the further user equipment 101b that has already reserved a resource announces the interference limits that can sustain via SCI messages. In this case safety margins should be included so as to assure that acceptable interferences will no more occur. The safety margins may be agreed in advance, provided by the group in the group SCI message, or directly included in the interference limits thus being transparent for the other UEs. The second group comprising the third user equipment 101c and the fourth user equipment 101d that wants to use a reserved resource calculates expected interference in the first group by calculating channel gain using the received power of the SCI message of the first group and the transmission power of the SCI message (alternatively this can be fixed).

In this case additional information may be included, for example, how many secondary users are acceptable, and the time period to use the resource as secondary user. Such information should also be included in the SCIs of the secondary UEs.

The procedure 600 shown in figure 6 comprises the following steps:
Step 601: the user equipment 101a sends towards the third user equipment 101c a SCI message that contains a first group identifier; a timer for the duration of the session; a service type; maximum allowed interference; and transmission power.
Step 603: the user equipment 101a sends towards the fourth user equipment 101d a SCI message that contains a first group identifier; a timer for the duration of the session; a service type; maximum allowed interference; and transmission power.
Step 605: the third user equipment 101c and the fourth user equipment 101d reach a joint agreement of using the resource that the user equipment 101a and the further user equipment 101b use with an adapted power.
Step 607: the third user equipment 101c sends towards the user equipment 101a a SCI message that contains a second group identifier; a timer; a service type; transmission power; and time information. Step 609: the fourth user equipment 101d sends towards the user equipment 101a a SCI message that contains a second group identifier; a timer; a service type; transmission power; and time information. Step 611: data transmission on the reserved resource between the user equipment 101a and the further user equipment 101b.
Step 613: data transmission on the reserved resource between the third user equipment 101c and the fourth user equipment 101b.
Step 615: data transmission on the reserved resource between the user equipment 101a and the further user equipment 101b.

Figure 7 shows a schematic diagram illustrating a procedure for distributed V2V power control with negotiation among the user equipments according to an embodiment. The group of user equipments that has already reserved a resource has the ability to allow transmissions on this resource under certain constraints. This implies coordination among the already formed group/session and the group/session that claims to use this resource. This may happen with new dedicated signaling or with the implementation where the "clear resource" message is used, as shown in figure 7.

The procedure 700 shown in figure 7 comprises the following steps:
Step 701: the user equipment 101a sends towards the third user equipment 101c a SCI message that contains a first group identifier; a timer for the duration of the session; a service type; maximum allowed interference; and transmission power.
Step 703: the user equipment 101a sends towards the fourth user equipment 101d a SCI message that contains a first group identifier; a timer for the duration of the session; a service type; maximum allowed interference; and transmission power.
Step 705: the third user equipment 101c and the fourth user equipment 101d reach a joint agreement of using the resource that the user equipment 101a and the further user equipment 101b use with an adapted power.
Step 707: the third user equipment 101c sends towards the user equipment 101a a SCI message that contains a second group identifier; a timer; a service type transmission power; and a request to be a secondary user.
Step 709: the fourth user equipment 101d sends towards the user equipment 101a a SCI message that contains a second group identifier; a timer; a service type; transmission power; and a request to be a secondary user.
Step 711: the user equipment 101a sends a message for granting the third user equipment 101c to be a secondary user.
Step 713: the user equipment 101a sends a message for granting the fourth user equipment 101d to be a secondary user.
Step 715: data transmission on the reserved resource between the user equipment 101a and the further user equipment 101b.
Step 717: data transmission on the reserved resource between the third user equipment 101c and the fourth user equipment 101d.
Step 719: data transmission on the reserved resource between the user equipment 101a and the further user equipment 101b.

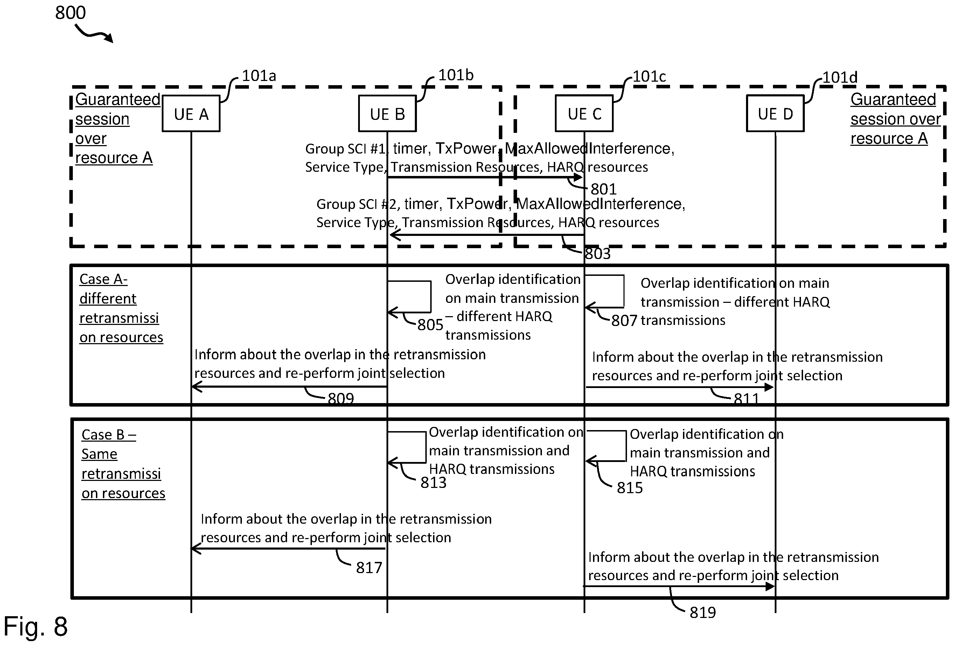

Figure 8 shows a schematic diagram illustrating a procedure for resolving resource conflict according to an embodiment. In case that two groups of user equipments are using the same resource because they selected the resource at the time when they could not sense each other (due to an obstacle or because they move toward opposite directions), a resolution for resource conflict can take place according to an embodiment.

First, different retransmission resources are selected: The vehicles that identify the collision in the resources inform the rest of the UEs in the two groups using the retransmission resources - in case the selected retransmission resources are different. In such case resource reselection may take place by renegotiation using the retransmission resources for identifying proper resources. This is shown as case A in figure 8.

Secondly, same retransmission resources are selected: The vehicles that identify the collision in the resources inform the rest of the UEs in the two groups using the retransmission resources. In this case the same message should be sent because of the collision; this will ensure informing the vehicles about the collision and perform resources reselection. This is shown as case B in figure 8.

The procedure 800 shown in figure 8 comprises the following steps:
Step 801: the further user equipment 101b sends, i.e. broadcasts towards the third user equipment 101c a SCI message that contain a first group identifier; a timer for the duration of the session; a service type; maximum allowed interference; transmission power and information about transmission resources and HARQ (Hybrid automatic repeat request) resources.
Step 803: the third user equipment 101c sends towards the further user equipment 101b a SCI message that contain a second group identifier; a timer for the duration of the session; a service type; maximum allowed interference; transmission power and information about transmission resources and HARQ resources.
Step 805: the further user equipment 101b identifies overlapping on main transmission but different HARQ transmissions.
Step 807: the third user equipment 101c identifies overlapping on main transmission but different HARQ transmissions.
Step 809: the further user equipment 101b informs the user equipment 101a about overlapping in the retransmission resources and re-performs selection of resources jointly.
Step 811: the third user equipment 101c informs the fourth user equipment 101d about overlapping in the retransmission resources and re-performs selection of resources jointly.
Step 813: the further user equipment 101b identifies overlapping on main transmission and HARQ transmissions.
Step 815: the third user equipment 101c identifies overlapping on main transmission and HARQ transmissions.
Step 817: the further user equipment 101b informs the user equipment 101a about overlapping in the retransmission resources and re-performs selection of resources jointly.
Step 819: the third user equipment 101c informs the fourth user equipment 101d about overlapping in the retransmission resources and re-performs selection of resources jointly.

One alternative implementation can be based on pre-allocated resources in the intersection area for the emergency notification of the user equipments of a certain group. The resources can be pre-allocated based on location, direction or any other splitting (e.g., time based splitting).

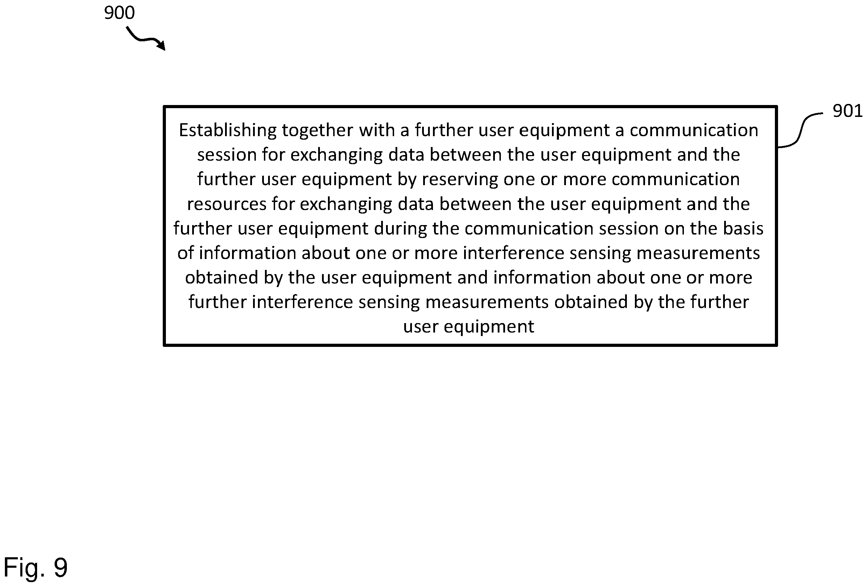

Figure 9 shows a schematic diagram illustrating a method 900 of communication between a user equipment 101a and a further user equipment 101b of a plurality of user equipments 101a-c in a wireless communication network 100. The method 900 comprises the step 901 of establishing together with the further user equipment 101b a communication session for exchanging data between the user equipment 101a and the further user equipment 101b by reserving one or more communication resources for exchanging data between the user equipment 101a and the further user equipment 101b during the communication session on the basis of information about one or more interference sensing measurements obtained by the user equipment 101a and information about one or more further interference sensing measurements obtained by the further user equipment 101b.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present application, which is defined by the appended claims.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the application beyond those described herein. While the present application has been described with reference to one or more particular embodiments, those skilled in the art recognize that many changes may be made thereto without departing from the scope of the present application, as defined by the appended claims.

## Claims

1. A user equipment (101a) for communicating with a further user equipment (101b) of a plurality of user equipments (101a-c) in a wireless communication network (100), wherein the user equipment (101a) is configured to establish together with the further user equipment (101b) a communication session for exchanging data between the user equipment (101a) and the further user equipment (101b) by reserving one or more communication resources for the communication session on the basis of information about one or more interference sensing measurements obtained by the user equipment (101a) and information about one or more further interference sensing measurements obtained by the further user equipment (101b), broadcast a first control message comprising information about the communication session and/or the one or more communication resources reserved for the communication session to the plurality of user equipments (101a-c);
**characterized in that** the user equipment is further configured to:
receive from at least one other user equipment of the plurality of user equipments (101a-c) a third control message containing information about an amount of interference allowed by the at least one other user equipment for one or more further communication resources reserved for a further communication session; and
transmit to the at least one other user equipment a request for continuing the communication session with the further user equipment (101b) using an adjusted transmission power used by the user equipment (101a) for exchanging data with the further user equipment (101b) using the one or more communication resources,
wherein the adjusted transmission power is based on the allowable amount of interference.

2. The user equipment (101a) of claim 1, wherein the user equipment (101a) is configured to reserve the one or more communication resources for exchanging data between the user equipment (101a) and the further user equipment (101b) during the communication session by:
receiving the information about the one or more further interference sensing measurements from the further user equipment (101b);
selecting the one or more communication resources on the basis of the information about the one or more interference sensing measurements obtained by the user equipment (101a) and the information about the one or more further interference sensing measurements received from the further user equipment (101b); reserving the selected one or more communication resources for the communication session; and
transmitting the selected one or more communication resources to the further user equipment (101b) for reserving the selected one or more communication resources by the further user equipment (101b).

3. The user equipment (101a) of claim 1, wherein the user equipment (101a) is configured to reserve the one or more communication resources for exchanging data between the user equipment (101a) and the further user equipment (101b) during the communication session by:
transmitting the information about the one or more interference sensing measurements obtained by the user equipment (101a) to the further user equipment f(101b) or allowing the further user equipment (101b) to select the one or more communication resources on the basis of the information about the one or more interference sensing measurements provided by the user equipment (101a) and the information about the one or more further interference sensing measurements obtained by the further user equipment (101b);
receiving the one or more communication resources selected by the further user equipment (101b) from the further user equipment (101b); and
reserving the one or more communication resources selected by the further user equipment (101b) for the communication session.

4. The user equipment (101a) of any one of the preceding claims, wherein the user equipment (101a) is configured to establish together with the further user equipment (101b) the communication session for exchanging data between the user equipment (101a) and the further user equipment (101b) by further broadcasting a session request message to the plurality of user equipments (101a-c) using a communication resource selected by the user equipment (101a), wherein the session request message comprises an identifier of the user equipment (101a), an identifier of the further user equipment (101b), a session identifier and/or a group identifier.

5. The user equipment (101a) of claim 4, wherein the session request message further comprises information about a plurality of candidate communication resources reserved by the user equipment (101a) and wherein the user equipment (101a) is further configured to receive data from the further user equipment (101b) using one or more of the plurality of candidate communication resources reserved by the user equipment (101a).

6. The user equipment (101a) of claim 4, wherein the user equipment (101a) is configured to establish together with the further user equipment (101b) the communication session for exchanging data between the user equipment (101a) and the further user equipment (101b) by further receiving, in response to the session request message, a session request response message from the further user equipment (101b), wherein the session request response message comprises an identifier of the user equipment (101a) an identifier of the further user equipment (101b) a session identifier and/or a group identifier.

7. The user equipment (101a) of any one of claims 1 to 6, wherein the user equipment (101a) is configured to reserve the one or more communication resources by assigning a unique identifier, in particular a session identifier, a user identifier, or a group identifier, to the communication session between the user equipment (101a) and the further user equipment (101b) and wherein the first control message comprises the unique identifier.

8. The user equipment (101a) of any one of claims 1 to 7, wherein the user equipment (101a) is configured to reserve the one or more communication resources for the communication session for a specified time period and wherein the first control message comprises the specified time period.

9. The user equipment (101a) of claim 8, wherein the user equipment (101a) is further configured, in case the communication session ends before the end of the specified time period, to broadcast a second control message for informing the plurality of user equipments (101a-c) that the reversed one or more communication resources have been released.

10. A method (900) of communication between a user equipment (101a) and a further user equipment (101b) of a plurality of user equipments (101a-c) in a wireless communication network (100), wherein the method (900) comprises:
establishing (901) together with the further user equipment (101b) a communication session for exchanging data between the user equipment (101a) and the further user equipment (101b) by reserving one or more communication resources for the communication session on the basis of information about one or more interference sensing measurements obtained by the user equipment (101a) and information about one or more further interference sensing measurements obtained by the further user equipment (101b),
broadcasting, by the user equipment (101a), a first control message comprising information about the communication session and/or the one or more communication resources reserved for the communication session to the plurality of user equipments (101a-c);
**characterized in that** the method further comprises:
receiving, by the user equipment (101a), from at least one other user equipment of the plurality of user equipments (101a-c) a third control message containing information about an amount of interference allowed by the at least one other user equipment for one or more further communication resources reserved for a further communication session; and
transmitting, by the user equipment (101a), to the at least one other user equipment a request for continuing the communication session with the further user equipment (101b) using an adjusted transmission power used by the user equipment (101a) for exchanging data with the further user equipment (101b) using the one or more communication resources,
wherein the adjusted transmission power is based on the allowable amount of interference.

## Patentansprüche

1. Benutzereinrichtung (101a) zum Kommunizieren mit einem weiteren Benutzereinrichtung (101b) einer Vielzahl von Benutzereinrichtungen (101a-c) in einem drahtlosen Kommunikationsnetz (100), wobei die Benutzereinrichtung (101a) konfiguriert ist, um zusammen mit der weiteren Benutzereinrichtung (101b) eine Kommunikationssitzung zum Austauschen von Daten zwischen der Benutzereinrichtung (101a) und der weiteren Benutzereinrichtung (101b) durch Reservieren einer oder mehrerer Kommunikationsressourcen für die Kommunikationssitzung auf Grundlage von Informationen über eine oder mehrere Störungserfassungsmessungen, die durch die Benutzereinrichtung (101a) erhalten werden, und Informationen über eine oder mehrere weitere Störungserfassungsmessungen, die durch die weiteren Benutzereinrichtung (101b) erhalten werden, einzurichten, Broadcasten einer ersten Steuernachricht, die Informationen über die Kommunikationssitzung und/oder die eine oder die mehrere Kommunikationsressourcen, die für die Kommunikationssitzung reserviert sind, mit der Vielzahl von Benutzereinrichtungen (101a-c) umfasst;
**dadurch gekennzeichnet, dass** die Benutzereinrichtung ferner für Folgendes konfiguriert ist:
Empfangen einer dritten Steuernachricht von mindestens einer anderen Benutzereinrichtung der Vielzahl von Benutzereinrichtungen (101a-c), die Informationen über eine Störungsmenge enthält, die durch die mindestens eine andere Benutzereinrichtung für eine oder mehrere weitere Kommunikationsressourcen, die für eine weitere Kommunikationssitzung reserviert sind, zugelassen ist; und
Übertragen einer Anforderung zum Fortsetzen der Kommunikationssitzung mit der weiteren Benutzereinrichtung (101b) an die mindestens eine andere Benutzereinrichtung unter Verwendung einer eingestellten Übertragungsleistung, die durch die Benutzereinrichtung (101a) zum Austauschen von Daten mit der weiteren Benutzereinrichtung (101b) unter Verwendung der einen oder mehreren Kommunikationsressourcen verwendet wird,
wobei die eingestellte Übertragungsleistung auf der zulässigen Störungsmenge basiert.

2. Benutzereinrichtung (101a) nach Anspruch 1, wobei die Benutzereinrichtung (101a) konfiguriert ist, um die eine oder die mehreren Kommunikationsressourcen zum Austauschen von Daten zwischen der Benutzereinrichtung (101a) und der weiteren Benutzereinrichtung (101b) während der Kommunikationssitzung durch Folgendes zu reservieren:
Empfangen der Informationen über die eine oder die mehreren weiteren Störungserfassungsmessungen von der weiteren Benutzereinrichtung (101b);
Auswählen der einen oder der mehreren Kommunikationsressourcen auf Grundlage der Informationen über die eine oder die mehreren Interferenzerfassungsmessungen, die durch die Benutzereinrichtung (101a) erhalten werden, und der Informationen über die eine oder mehreren weiteren Interferenzerfassungsmessungen, die von der weiteren Benutzereinrichtung (101b) empfangen werden;
Reservieren der ausgewählten einen oder mehreren Kommunikationsressourcen für die Kommunikationssitzung; und
Übertragen der ausgewählten Kommunikationsressourcen an die weitere Benutzereinrichtung (101b) zum Reservieren der ausgewählten einen oder mehreren Kommunikationsressourcen durch die weitere Benutzereinrichtung (101b).

3. Benutzereinrichtung (101a) nach Anspruch 1, wobei die Benutzereinrichtung (101a) konfiguriert ist, um die eine oder die mehreren Kommunikationsressourcen zum Austauschen von Daten zwischen der Benutzereinrichtung (101a) und der weiteren Benutzereinrichtung (101b) während der Kommunikationssitzung durch Folgendes zu reservieren:
Übertragen der Informationen über die eine oder die mehreren Interferenzerfassungsmessungen, die durch die Benutzereinrichtung (101a) erhalten werden, an die weitere Benutzereinrichtung (101b) oder Zulassen der weiteren Benutzereinrichtung (101b) die eine oder die mehreren Kommunikationsressourcen auf Grundlage der Informationen über die eine oder mehreren Interferenzerfassungsmessungen, die durch die Benutzereinrichtung (101a) bereitgestellt werden, und die Informationen über die eine oder mehreren weiteren Interferenzerfassungsmessungen, die durch die weitere Benutzereinrichtung (101b) erhalten werden, zu wählen;
Empfangen der einen oder mehreren Kommunikationsressourcen, die durch die weitere Benutzereinrichtung (101b) ausgewählt werden, von der weiteren Benutzereinrichtung (101b); und
Reservieren der einen oder mehreren Kommunikationsressourcen, die durch die weitere Benutzereinrichtung (101b) ausgewählt werden, für die Kommunikationssitzung.

4. Benutzereinrichtung (101a) nach einem der vorstehenden Ansprüche, wobei die Benutzereinrichtung (101a) konfiguriert ist, um zusammen mit der weiteren Benutzereinrichtung (101b) die Kommunikationssitzung zum Austauschen von Daten zwischen der Benutzereinrichtung (101a) und der weiteren Benutzereinrichtung (101b) durch weiteres Broadcasten einer Sitzungsanforderungsnachricht an die Vielzahl von Benutzereinrichtungen (101a-c) unter Verwendung einer Kommunikationsressource, die durch die Benutzereinrichtung (101a) ausgewählt wird, einzurichten, wobei die Sitzungsanforderungsnachricht einen Bezeichner der Benutzereinrichtung (101a), einen Bezeichner der weiteren Benutzereinrichtung (101b), einen Sitzungsbezeichner und/oder einen Gruppenbezeichner umfasst.

5. Benutzereinrichtung (101a) nach Anspruch 4, wobei die Sitzungsanforderungsnachricht ferner Informationen über eine Vielzahl von Kandidatenkommunikationsressourcen umfasst, die durch die Benutzereinrichtung (101a) reserviert ist, und wobei das Benutzereinrichtung (101a) ferner konfiguriert ist, um Daten von der weiteren Benutzereinrichtung (101b) unter Verwendung einer oder mehrerer der Vielzahl von Kandidatenkommunikationsressourcen, die durch die Benutzereinrichtung (101a) reserviert ist, zu empfangen.

6. Benutzereinrichtung (101a) nach Anspruch 4, wobei die Benutzereinrichtung (101a) konfiguriert ist, um zusammen mit der weiteren Benutzereinrichtung (101b) die Kommunikationssitzung zum Austauschen von Daten zwischen der Benutzereinrichtung (101a) und der weiteren Benutzereinrichtung (101b) durch weiteres Empfangen, als Reaktion auf die Sitzungsanforderungsnachricht, einer Sitzungsanforderungsantwortnachricht von der weiteren Benutzereinrichtung (101b), einzurichten, wobei die Sitzungsanforderungsantwortnachricht einen Bezeichner der Benutzereinrichtung (101a), einen Bezeichner der weiteren Benutzereinrichtung (101b) einen Sitzungsbezeichner und/oder einen Gruppenbezeichner umfasst.

7. Benutzereinrichtung (101a) nach einem der Ansprüche 1 bis 6, wobei die Benutzereinrichtung (101a) konfiguriert ist, um die eine oder die mehreren Kommunikationsressourcen durch Zuweisen eines eindeutigen Bezeichners, insbesondere eines Sitzungsbezeichners, eines Benutzerbezeichners oder eines Gruppenbezeichners, auf die Kommunikationssitzung zwischen der Benutzereinrichtung (101a) und der weiteren Benutzereinrichtung (101b) zu reservieren, und wobei die erste Steuernachricht den eindeutigen Bezeichner umfasst.

8. Benutzereinrichtung (101a) nach einem der Ansprüche 1 bis 7, wobei die Benutzereinrichtung (101a) konfiguriert ist, um die eine oder die mehreren Kommunikationsressourcen für die Kommunikationssitzung für einen angegebenen Zeitraum zu reservieren, und wobei die erste Steuernachricht den angegebenen Zeitraum umfasst.

9. Benutzereinrichtung (101a) nach Anspruch 8, wobei die Benutzereinrichtung (101a) ferner konfiguriert ist, für den Fall, dass die Kommunikationssitzung vor dem Ende des angegebenen Zeitraums endet, eine zweite Steuernachricht zum Informieren der Vielzahl von Benutzereinrichtungen (101a-c), dass die umgekehrte eine oder mehrere Kommunikationsressourcen freigegeben wurden, zu broadcasten.

10. Verfahren (900) für eine Kommunikation zwischen einer Benutzereinrichtung (101a) und einer weiteren Benutzereinrichtung (101b) einer Vielzahl von Benutzereinrichtungen (101a-c) in einem drahtlosen Kommunikationsnetz (100), wobei das Verfahren (900) Folgendes umfasst:
Einrichten (901) einer Kommunikationssitzung zum Austauschen von Daten zwischen der Benutzereinrichtung (101a) und der weiteren Benutzereinrichtung (101b) zusammen mit der weiteren Benutzereinrichtung (101b) durch Reservieren einer oder mehrerer Kommunikationsressourcen für die Kommunikationssitzung auf Grundlage von Informationen über eine oder mehrere Interferenzerfassungsmessungen, die durch die Benutzereinrichtung (101a) erhalten werden, und Informationen über eine oder mehrere weitere Interferenzerfassungsmessungen, die durch die weitere Benutzereinrichtung (101b) erhalten werden,
Broadcasten, durch die Benutzereinrichtung (101a), einer ersten Steuernachricht, die Informationen über die Kommunikationssitzung und/oder die eine oder die mehreren Kommunikationsressourcen, die für die Kommunikationssitzung reserviert sind, umfasst, an die Vielzahl von Benutzereinrichtungen (101a-c);
**dadurch gekennzeichnet, dass** das Verfahren ferner Folgendes umfasst:
Empfangen, durch die Benutzereinrichtung (101a), von mindestens einer anderen Benutzereinrichtung der Vielzahl von Benutzereinrichtungen (101a-c) einer dritten Steuernachricht, die Informationen über eine Interferenzmenge enthält, die durch die mindestens eine andere Benutzereinrichtung für eine oder mehrere weitere Kommunikationsressourcen, die für eine weitere Kommunikationssitzung reserviert sind, zugelassen ist; und
Übertragen, durch die Benutzereinrichtung (101a), einer Anforderung zum Fortsetzen der Kommunikationssitzung mit der weiteren Benutzereinrichtung (101b) an die mindestens eine andere Benutzereinrichtung unter Verwendung einer eingestellten Übertragungsleistung, die durch die Benutzereinrichtung (101a) zum Austauschen von Daten mit der weiteren Benutzereinrichtung (101b) unter Verwendung der einen oder der mehreren Kommunikationsressourcen verwendet wird,
wobei die eingestellte Übertragungsleistung auf der zulässigen Störungsmenge basiert.

## Revendications

1. Équipement utilisateur (101a) pour communiquer avec un équipement utilisateur supplémentaire (101b) d'une pluralité d'équipements utilisateur (101a-c) dans un réseau de communication sans fil (100), l'équipement utilisateur (101a) étant configuré pour établir conjointement avec l'équipement d'utilisateur supplémentaire (101b) une session de communication pour échanger des données entre l'équipement utilisateur (101a) et l'équipement utilisateur supplémentaire (101b) en réservant une ou plusieurs ressources de communication pour la session de communication sur la base d'informations concernant une ou plusieurs mesures de détection de brouillage obtenues par l'équipement utilisateur (101a) et des informations concernant une ou plusieurs mesures de détection de brouillage supplémentaires obtenues par l'équipement utilisateur supplémentaire (101b), la diffusion d'un premier message de commande comprenant des informations concernant la session de communication et/ou la ou les ressources de communication réservées à la session de communication avec la pluralité d'équipements utilisateurs (101a-c) ;
**caractérisé en ce que** l'équipement utilisateur est en outre configuré pour :
recevoir depuis au moins un autre équipement utilisateur de la pluralité d'équipements utilisateur (101a-c) un troisième message de commande contenant des informations sur une quantité de brouillage autorisée par l'au moins un autre équipement utilisateur pour une ou plusieurs ressources de communication supplémentaires réservées à un équipement utilisateur session de communication supplémentaire ; et
transmettre à l'au moins un autre équipement utilisateur une demande de poursuite de la session de communication avec l'équipement utilisateur supplémentaire (101b) à l'aide d'une puissance d'émission ajustée utilisée par l'équipement utilisateur (101a) pour échanger des données avec l'équipement utilisateur supplémentaire (101b) à l'aide d'une ou de plusieurs ressources de communication,
dans lequel la puissance d'émission ajustée est basée sur la quantité autorisée de brouillage.

2. Équipement utilisateur (101a) selon la revendication 1, dans lequel l'équipement utilisateur (101a) est configuré pour réserver la ou les ressources de communication pour échanger des données entre l'équipement utilisateur (101a) et l'équipement utilisateur supplémentaire (101b) pendant la session de communication par :
la réception des informations concernant la ou les mesures de détection de brouillage supplémentaires provenant de l'équipement utilisateur supplémentaire (101b) ;
la sélection de la ou des ressources de communication sur la base des informations concernant la ou les mesures de détection de brouillage obtenues par l'équipement utilisateur (101a) et des informations concernant la ou les mesures de détection de brouillage supplémentaires reçues de l'équipement utilisateur supplémentaire (101b) ; la réservation de la ou des ressources de communication sélectionnées pour la session de communication ; et
la transmission de la ou des ressources de communication sélectionnées à l'équipement utilisateur supplémentaire (101b) pour réserver la ou les ressources de communication sélectionnées par l'équipement utilisateur supplémentaire (101b).

3. Équipement utilisateur (101a) selon la revendication 1, dans lequel l'équipement utilisateur (101a) est configuré pour réserver la ou les ressources de communication pour échanger des données entre l'équipement utilisateur (101a) et l'équipement utilisateur supplémentaire (101b) pendant la session de communication par :
la transmission des informations concernant la ou les mesures de détection de brouillage obtenues par l'équipement utilisateur (101a) à l'équipement utilisateur supplémentaire (101b) ou autoriser l'équipement utilisateur supplémentaire (101b) à sélectionner la ou les ressources de communication sur la base des informations concernant la ou les mesures de détection de brouillage fournies par l'équipement utilisateur (101a) et des informations concernant la ou les mesures de détection de brouillage supplémentaires obtenues par l'équipement utilisateur supplémentaire (101b) ;
la réception de la ou des ressources de communication sélectionnées par l'équipement utilisateur supplémentaire (101b) provenant de l'équipement utilisateur supplémentaire (101b) ; et
la réservation de la ou des ressources de communication sélectionnées par l'équipement utilisateur supplémentaire (101b) pour la session de communication.

4. Équipement utilisateur (101a) selon l'une quelconque des revendications précédentes, dans lequel l'équipement utilisateur (101a) est configuré pour établir conjointement avec l'équipement utilisateur supplémentaire (101b) la session de communication pour échanger des données entre l'équipement utilisateur (101a) et l'équipement utilisateur supplémentaire (101b) en diffusant en outre un message de demande de session à la pluralité d'équipements utilisateurs (101a-c) à l'aide d'une ressource de communication sélectionnée par l'équipement utilisateur (101a), le message de demande de session comprenant un identifiant de l'équipement utilisateur (101a), un identifiant de l'équipement utilisateur supplémentaire (101b), un identifiant de session et/ou un identifiant de groupe.

5. Équipement utilisateur (101a) selon la revendication 4, dans lequel le message de demande de session comprend en outre des informations concernant une pluralité de ressources de communication candidates réservées par l'équipement utilisateur (101a) et dans lequel l'équipement utilisateur (101a) est en outre configuré pour recevoir des données de l'équipement utilisateur supplémentaire (101b) à l'aide d'une ou de plusieurs ressources de communication candidates réservées par l'équipement utilisateur (101a).

6. Équipement utilisateur (101a) selon la revendication 4, dans lequel l'équipement utilisateur (101a) est configuré pour établir conjointement avec l'équipement utilisateur supplémentaire (101b) la session de communication pour échanger des données entre l'équipement utilisateur (101a) et l'équipement utilisateur supplémentaire (101b) en recevant en outre, en réponse au message de demande de session, un message de réponse de demande de session de l'équipement d'utilisateur supplémentaire (101b), le message de réponse de demande de session comprenant un identifiant de l'équipement utilisateur (101a), un identifiant de l'équipement utilisateur supplémentaire (101b), un identifiant de session et/ou un identifiant de groupe.

7. Équipement utilisateur (101a) selon l'une quelconque des revendications 1 à 6, dans lequel l'équipement utilisateur (101a) est configuré pour réserver la ou les ressources de communication en attribuant un identifiant unique, en particulier un identifiant de session, un identifiant d'utilisateur ou un identifiant de groupe, à la session de communication entre l'équipement utilisateur (101a) et l'équipement utilisateur supplémentaire (101b) et dans lequel le premier message de commande comprend l'identifiant unique.

8. Équipement utilisateur (101a) selon l'une quelconque des revendications 1 à 7, dans lequel l'équipement utilisateur (101a) est configuré pour réserver la ou les ressources de communication pour la session de communication pendant une période de temps spécifiée et dans lequel le premier message de commande comprend la période de temps spécifiée.

9. Équipement utilisateur (101a) selon la revendication 8, dans lequel l'équipement utilisateur (101a) est en outre configuré, au cas où la session de communication se termine avant la fin de la période de temps spécifiée, pour diffuser un deuxième message de commande pour informer la pluralité d'équipements utilisateurs (101a-c) que la ou les ressources de communication inversées ont été libérées.

10. Procédé (900) de communication entre un équipement utilisateur (101a) et un équipement utilisateur supplémentaire (101b) d'une pluralité d'équipements utilisateur (101a-c) dans un réseau de communication sans fil (100), le procédé (900) comprenant :
l'établissement (901) conjointement avec l'équipement utilisateur supplémentaire (101b) d'une session de communication pour échanger des données entre l'équipement utilisateur (101a) et l'équipement utilisateur supplémentaire (101b) en réservant une ou plusieurs ressources de communication pour la session de communication sur la base d'informations concernant une ou plusieurs mesures de détection de brouillage obtenues par l'équipement utilisateur (101a) et des informations concernant une ou plusieurs mesures de détection de brouillage supplémentaires obtenues par l'équipement utilisateur supplémentaire (101b),
la diffusion, par l'équipement utilisateur (101a), d'un premier message de commande comprenant des informations sur la session de communication et/ou la ou les ressources de communication réservées pour la session de communication à la pluralité d'équipements utilisateurs (101a-c) ;
**caractérisé en ce que** le procédé comprend en outre :
la réception, par l'équipement utilisateur (101a), d'au moins un autre équipement utilisateur de la pluralité d'équipements utilisateurs (101a-c), un troisième message de commande contenant des informations concernant une quantité de brouillage autorisée par l'au moins un autre équipement utilisateur pour un ou plusieurs ressources de communication supplémentaires réservées à une session de communication supplémentaire ; et
la transmission, par l'équipement utilisateur (101a), à l'au moins un autre équipement utilisateur d'une demande de poursuite de la session de communication avec l'équipement utilisateur supplémentaire (101b) à l'aide d'une puissance d'émission ajustée utilisée par l'équipement utilisateur (101a) pour échanger des données avec l'équipement utilisateur supplémentaire (101b) à l'aide de la ou des ressources de communication,
dans lequel la puissance d'émission ajustée est basée sur la quantité autorisée de brouillage.
